# EUROPÄISCHE PATENTSCHRIFT

(11) **EP 1 397 308 B1**
(45) Veröffentlichungstag und Bekanntmachung des Hinweises auf die Patenterteilung: **07.12.2005**
(21) Anmeldenummer: 02747169.7
(22) Anmeldetag: 24.05.2002
(51) Int. Cl.: C01B 13/11

(54) **VERFAHREN UND VORRICHTUNG ZUR ERZEUGUNG VON OZON**
METHOD AND DEVICE FOR GENERATING OZONE
PROCEDE ET DISPOSITIF POUR LA GENERATION D'OZONE

(30) Priorität: 26.05.2001 DE 10125823
(43) Veröffentlichungstag der Anmeldung: 17.03.2004
(73) Patentinhaber: Wedeco Gesellschaft für Umwelttechnologie Mbh, 40472 Düsseldorf (DE)
(72) Erfinder: BILLING, Ernst, Martin, 32130 Enger (DE); FIEKENS, Ralf, 33758 Stukenbrock (DE); HOFER, Uwe, 32584 Löhne (DE)
(74) Vertreter: Patentanwälte Thömen & Körner
(86) Internationale Anmeldenummer: PCT/DE2002/001890
(87) Internationale Veröffentlichungsnummer: WO 2002/096798

(56) Entgegenhaltungen:
- GB-A- 2 320 171
- US-A- 4 232 229
- US-A- 5 554 345
- US-A- 6 106 788
- PATENT ABSTRACTS OF JAPAN vol. 1998, no. 13, 30. November 1998 (1998-11-30) & JP 10 203805 A (YASKAWA ELECTRIC CORP), 4. August 1998 (1998-08-04)
- PATENT ABSTRACTS OF JAPAN vol. 001, no. 054 (C-014), 25. Mai 1977 (1977-05-25) & JP 52 015492 A (TOSHIBA CORP), 5. Februar 1977 (1977-02-05)

## Beschreibung

Die Erfindung betrifft ein Verfahren zur Erzeugung von Ozon gemäß dem Oberbegriff des Anspruchs 1 und eine Vorrichtung zur Erzeugung von Ozon gemäß dem Oberbegriff des Anspruchs 3.

Ozon ist ein starkes Oxidationsmittel für organische Substanzen sowie anorganische Verbindungen, bei denen Elemente mit mehreren Oxidationsstufen vorliegen. Von den vielfältigen Anwendungen für dieses Oxidationsmittel sind in den letzten Jahren speziell die Anwendungen für die Wasserbehandlung intensiv weiter entwickelt worden.

Die Erzeugung von Ozon wird durch elektrische Entladung in sauerstoffhaltigem Gas realisiert. Die sogenannte stille elektrische Entladung repräsentiert im Gegensatz zur Funkenentladung eine stabile Plasma- oder Koronaentladung. Dabei wird molekularer Sauerstoff in atomaren Sauerstoff dissoziiert. Die so entstandenen reaktiven Sauerstoffatome lagern sich wiederum in einer exothermen Reaktion an vorhandene Sauerstoffmoleküle an und bilden so das drei-atomige Ozonmolekül.

Wesentliche Parameter für die Effizienz der gesamten Reaktionskette sind die Gaszusammensetzung, die elektrische Feldstärke, die Betriebstemperatur und der Betriebsdruck des Ozon erzeugenden Systems.

In den letzten Jahren wurden durch den technologischen Fortschritt bei den Fertigungstoleranzen zunehmend kleinere Reaktionsspalte realisiert, die sowohl die Feldstärke als auch die im Spalt entstehende Temperatur beeinflussen. Spaltweiten von 250 *µ*m gehören heute zum Stand der Technik.

Eine Vorrichtung der eingangs genannten Art ist aus der WO 97/09268 bekannt. Die Vorrichtung umfasst eine Anordnung mit wenigstens einem von dem Gas durchströmten Spalt, der zwischen einer Elektrode und einem Dielektrikum gebildet ist, das den Spalt von einer weiteren Elektrode trennt. Wenigstens einer der Spalte ist durch eine elektrisch leitfähige und wärmeleitfähige gasdurchlässige Anordnung ausgefüllt, die im elektrischen Kontakt und Wärmekontakt zur benachbarten Elektrode steht und die vom sauerstoffhaltigen Gas durchströmt wird und eine Vielzahl von Entladungsräumen bildet, in denen das sauerstoffhaltige Gas einer hohen Feldstärke ausgesetzt und in Ozon umgewandelt wird.

Die dort beschriebene elektrisch leitfähige und wärmeleitfähige, gasdurchlässige Anordnung füllt wenigstens einen Spalt vollständig aus und umfasst vorzugsweise Draht, der als Gestrick ausgebildet ist.

Durch Anpassung der Maschenzahl, Maschengröße, Drahtstärke sowie der Gestrickdicke, der Anzahl der verstrickten Drähte und der Anzahl der Gestricklagen lassen sich so der Strömungswiderstand der Anordnung einstellen, die Größe der Entladungsräume an maximale Ozonproduktion anpassen, die Verwirbelung und Durchmischung des Gases einstellen und die Kühlung und Wärmeabfuhr optimieren.

Ausgehend von diesem Stand der Technik liegt der Erfindung die Aufgabe zugrunde, generell ein Verfahren und eine entsprechende Vorrichtung anzugeben, mit der die Ozonausbeute bei vergleichbarem Energieeinsatz deutlich erhöht werden kann.

Diese Aufgabe wird bei einem Verfahren nach dem Oberbegriff des Anspruchs 1 und bei einer Vorrichtung nach dem Oberbegriff des Anspruchs 3 durch die im jeweiligen Kennzeichen angegebenen Merkmale gelöst.

Bei dem erfindungsgemäßen Verfahren wird eine Verteilung des Gesamtvolumenstroms des Gases zwischen den Spalten durch eine konzentrierte Drosselung des Volumenstroms wenigstens eines Spaltes gesteuert.

Durch die erfindungsgemäße gezielte Einstellung der Gasverteilung zwischen den Spalten wird unter Berücksichtigung von Spaltoptimierungen hinsichtlich der genutzten physikalischen Effekte, der Feldstärkeprofile und der Temperaturverläufe eine Effizienzsteigerung der Ozonerzeugung erreicht. Es wurde nämlich herausgefunden, dass durch gezielte Beeinflussung des Volumenstroms des Gases bei gegebener Spaltgeometrie und gegebenen elektrisch/physikalischen Betriebsbedingungen eine Optimierung der Ozonausbeute im Vergleich zur eingesetzten elektrischen Energie möglich ist.

Werden zwei Spalte genutzt, die parallel vom Gas durchströmt werden, so ließ sich bisher nur eine Optimierung für einen der Spalte oder für eine Mittelung beider Spalte erzielen. Durch die erfindungsgemäße Maßnahme geling es, eine Optimierung für jeden der Spalte vorzunehmen, wodurch die gesamte Ozonausbeute im Vergleich zur eingesetzten elektrischen Energie nochmals gesteigert wird.

Das erfindungsgemäße Verfahren ist für Systeme verwendbar, in denen zwei oder mehrere Spalte zur Entladung genutzt werden. In einem solchen Mehrspalt-System können durch die definierte Verteilung des Gesamtvolumenstromes des Gases bestimmte Vorteile einzelner Spalte herausgearbeitet werden. So ist es beispielsweise möglich, das Feldstärkeprofil als Basisparameter anzusetzen, um eine Verteilung des Gesamtvolumenstromes des Gases auf einen Spalt so zu forcieren, dass der energetisch am günstigsten liegende Spalt den Großteil des Ozons erzeugen kann.

Die Praxis hat gezeigt, dass bei herkömmlichen Vorrichtungen mit wenigstens zwei parallel angeordneten Spalten die verteilung des Gesamtvolumenstromes des Gases zwischen den Spalten im wesentlichen durch die Geometrie der Spalten selbst geprägt ist. Ein Verfahren, das die Verteilung des Gesamtvolumenstromes des Gases steuert, ist nicht bekannt. Mit einem in der WO 97/09268 beschriebenen, den Spalt vollständig ausfüllenden Gestrick lässt sich eine definierte Verteilung des Gesamtvolumenstromes nur mit geringer Variation von etwa 2 bis 8% realisieren.

Die Optimierung nur eines Spaltes hinsichtlich einer Effizienzsteigerung der Ozonerzeugung, beispielsweise durch eine Spaltweitenreduzierung, hat in gleicher Weise Auswirkung auf den korrespondierenden Spalt und führt in Summe zu keiner signifikanten Veränderung der Ozonausbeute.

Zur Durchführung des erfindungsgemäßen Verfahrens wird eine konzentrierte Drosselung des Volumenstroms des Gases wenigstens eines Spaltes vorgenommen. Unter konzentrierter Drosselung wird verstanden, dass die Drosselstrecke in ihrer Länge wesentlich kleiner als die Länge des Spaltes ist. Die Drosselung kann am Eingang oder Ausgang oder innerhalb des Spaltes oder einer Unterkombination am Eingang und Ausgang oder am Eingang und innerhalb des Spaltes oder am Ausgang und innerhalb des Spaltes oder am Eingang und Ausgang und innerhalb des Spaltes erfolgen.

Die konzentrierte Drosselung erfolgt durch eine Drossel, die als eine sich im Wesentlichen über den Querschnitt des Spaltes erstreckende, vom Gas durchströmbare Hülse und/oder ein sich über den Querschnitt des Spaltes erstreckender vom Gas durchströmbarer Stopfen ausgebildet ist.

Bei dieser Ausgestaltung führt ein Druckabfall zu einer definierten Verteilung des Gesamtvolumenstromes des Gases zwischen den Spalten.

Ergänzend kann eine Verteilung des Gesamtvolumenstroms des Gases zwischen den Spalten zusätzlich durch eine gestreckte Drosselung des Volumenstroms des Gases wenigstens innerhalb eines Spaltes gesteuert werden. Unter gestreckte Drosselung wird eine Länge der Drosselstrecke verstanden, die sich über die gesamte Länge oder wenigstens 20% der Länge des Spaltes erstreckt.

Die erfindungsgemäße Vorrichtung zeichnet sich dadurch aus, dass wenigstens ein Spalt eine konzentrierte Drossel umfasst, welche zu einer definierte Verteilung des Gesamtvolumenstromes des Gases zwischen den Spalten führt.

Der Volumenstrom ist dabei umgekehrt proportional zu dem durch die konzentrierte Drossel im Spalt hervorgerufenen Strömungswiderstand. Der Gesamtvolumenstrom setzt sich aus den einzelnen Volumenströme der Spalten zusammen. Dadurch lässt sich in Abhängigkeit der Ausgestaltung der Drosselung eine definierte Verteilung des Gesamtvolumenstromes des Gases zwischen den Spalten einstellen.

Ergänzend kann wenigstens ein Spalt zusätzlich eine gestreckte Drossel umfassen. Dabei kann die gestreckte Drossel durch eine Profilierung der Oberfläche der zum Spalt weisenden Elektrode und/oder des Dielektrikums gebildet sein. Es ist dadurch möglich, die Drosselwirkung aufzuteilen und mit der konzentrierten Drossel eine Feineinstellung zu erzielen.

Die als Hülse oder Stopfen ausgebildete Drossel besteht vorzugsweise aus einem Vollmaterialkörper. Dieser erstreckt sich vollständig über den Querschnitt des Spaltes und ist mit gasdurchlässigen Schlitzen oder Bohrungen versehen ist und/oder erstreckt sich über einen Teilquerschnitt des Spaltes. Die Drosselwirkung der so ausgebildeten Vollmaterialkörper beruht auf einer Düsenwirkung.

In einer vorteilhaften Ausgestaltung der Erfindung ist die konzentrierte Drossel kreisringförmig gestaltet und in einem ersten und/oder zweiten Spalt angeordnet ist. Dabei ist der erste Spalt durch einen zwischen einer ersten Elektrode und einem Dielektrikum gebildeten zylindrischen Ringraum und der zweite Spalt durch einen zwischen dem Dielektrikum und einer zweiten Elektrode umschlossenen zylindrischen Ringraum gebildet.

Bei einer derartigen Ausgestaltung wird der Gasvolumenstrom auf lediglich zwei Spalten verteilt. Die Verteilung des Gasvolumenstroms lässt sich in diesem Fall besonders einfach zur Erhöhung der Ozonausbeute steuern.

Eine Weiterbildung sieht vor, dass die Drossel eine integrierte Hochspannungssicherung umfasst. Hierdurch kann zur Vermeidung von Schäden der Vorrichtung, insbesondere des Elektrodenoberfläche, des Dielektrikums oder des Hochspannungsgenerators auf eine gesonderte Sicherung verzichtet werden.

Zweckmäßig besteht der Körper aus sauerstoff- und ozonbeständigem Material. Diese Maßnahme sorgt für gleichbleibende ozonerzeugende Eigenschaften und Wartungsfreiheit.

Als Alternative zur zylindersymmetrischen Ausgestaltung der Erfindung ist vorgesehen, dass die Drossel und die erste und zweite Elektrode und das Dielektrikum plattenförmig ausgebildet sind.

Gemäß einer vorteilhaften Ausgestaltung der Erfindung ist die Verteilung des Gasvolumenstromes zwischen den Spalten in einem Bereich von 20 bis 80 % einstellbar, was zu einer wesentlichen Effizienzsteigerung gegenüber dem Stand der Technik führt.

Ein besonderer Vorteil der Erfindung besteht darin, durch individuelle Bemessung des Strömungswiderstandes der Drossel Bauteiletoleranzen mit Einfluss auf die Ozongasausbeute in einer Serie der Vorrichtung zu kompensieren.

Dies hilft bei der Produktion die Ausschussanteile zu reduzieren und ermöglicht die Herstellung von Vorrichtungen mit engen Toleranzen der Kennwerte und damit exakt berechnenbaren Kennwerten von Gesamtanlagen.

Nachfolgend wird die Erfindung anhand von Ausführungsbeispielen erläutert, die in der Zeichnung dargestellt sind. In dieser zeigen:
- Fig. 1: eine teilperspektivische schnittbildliche Darstellung einer Vorrichtung in zylindersymmetrischer Ausgestaltung mit einer als Stopfen ausgebildeten Drossel und
- Fig. 2: eine teilperspektivische schnittbildliche Darstellung einer Vorrichtung in zylindersymmetrischer Ausgestaltung mit einer als Hülse ausgebildeten Drossel.

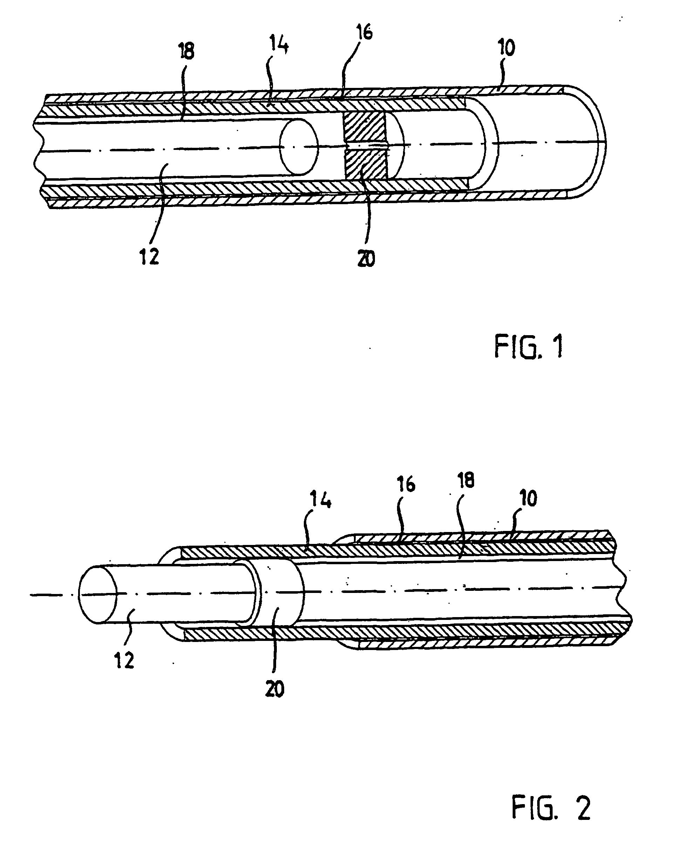

Fig. 1 und 2 zeigen eine spezielle zylindersymmetrische Ausgestaltung der Vorrichtung. Eine erste äußere Elektrode 10, die auf Bezugspotential liegt, nimmt im Inneren ein zylindrisches Dielektrikum 14 und dieses wiederum eine zweite innere Elektrode 12 auf, die auf Hochspannungspotential liegt. Sowohl zwischen der ersten Elektrode 10 und dem Dielektrikum 14 als auch zwischen dem Dielektrikum 14 und der zweiten Elektrode 12 sind Spalte 16, 18 gebildet.

Im inneren Spalt 18 ist eine Drossel 20 angeordnet. In Fig. 1 ist diese Drossel 20 in Form eines vor der zweiten Elektrode 12 angeordneten vom Gas durchströmbaren Stopfens nach Art einer Düse ausgebildet. Der Stopfen ist am Ende des inneren Spaltes 18 angeordnet. Dagegen ist die Drossel 20 gemäß Fig. 2 in Form einer die zweite Elektrode 12 im Kopfbereich umschließenden und vom Gas durchströmbaren Hülse ausgebildet.

Stopfen und Hülse füllen nur einen Teil des inneren Spaltes 18 aus und führen zu einer Beschränkung des Spaltvolumens. Dadurch wird eine definierte Verteilung des Gasvolumenstromes zwischen den Spalten 16, 18 erreicht.

Dem durch die Vorrichtung strömenden Gas wird durch die Drossel 20 ein Strömungswiderstand entgegengesetzt, der zu einer definierten Verteilung des Gesamtvolumenstromes des Gases zwischen den Spalten in Abhängigkeit von der Ausgestaltung der Drossel 20 führt. Durch die Verteilung des Gasvolumenstroms zwischen den Spalten wird eine Effizienzsteigerung der Ozonausbeute gegenüber dem Stand der Technik von bis zu 15% erzielt.

## Patentansprüche

1. Verfahren zur Erzeugung von Ozon aus sauerstoffhaltigen Gasen durch stille elektrische Entladung in einer Anordnung mit wenigstens zwei von dem Gas durchströmten Spalten (16, 18), die jeweils zwischen einer Elektrode (10, 12) und einem Dielektrikum (14) gebildet werden, das den jeweiligen Spalt (16, 18) von einer weiteren Elektrode (12; 10) trennt, **dadurch gekennzeichnet, dass** eine Verteilung des Gesamtvolumenstroms des Gases zwischen den Spalten (16, 18) durch eine konzentrierte Drosselung des Volumenstroms des Gases wenigstens eines Spaltes (16, 18) am Eingang oder Ausgang oder innerhalb des Spaltes (16, 18) oder einer Unterkombination am Eingang und Ausgang oder am Eingang und innerhalb des Spaltes (16, 18) oder am Ausgang und innerhalb des Spaltes (16, 18) oder am Eingang und Ausgang und innerhalb des Spaltes (16, 18) gesteuert wird, wobei die konzentrierte Drosselung durch eine Drossel (20) vorgenommen wird, die als eine sich im Wesentlichen über den Querschnitt des Spaltes (16, 18) erstreckende, vom Gas durchströmbare Hülse und/oder ein sich über den Querschnitt des Spaltes (16, 18) erstreckender vom Gas durchströmbarer Stopfen ausgebildet ist und deren Drosselstrecke in ihrer Länge wesentlich kleiner als die Länge des Spaltes (16, 18) ist.

2. Verfahren nach Anspruch 1, **dadurch gekennzeichnet, dass** eine Verteilung des Gesamtvolumenstroms des Gases zwischen den Spalten (16, 18) zusätzlich durch eine gestreckte Drosselung des Volumenstroms des Gases wenigstens innerhalb eines Spaltes (16, 18) gesteuert wird, wobei die gestreckte Drosselung durch eine Drossel vorgenommen wird, deren Länge der Drosselstrecke sich über die gesamte Länge oder wenigstens 20% der Länge des Spaltes (16, 18) erstreckt.

3. Vorrichtung zur Erzeugung von Ozon aus sauerstoffhaltigen Gasen durch stille elektrische Entladung in einer Anordnung mit wenigstens zwei von dem Gas durchströmten Spalten (16, 18), die jeweils zwischen einer Elektrode (10, 12) und Dielektrikum (14) gebildet sind, das den jeweiligen Spalt (16, 18) von einer weiteren Elektrode (12, 10) trennt, **dadurch gekennzeichnet, dass** wenigstens ein Spalt (16, 18) eine konzentrierte Drossel (20) zur Drosselung des Volumenstroms des Gases am Eingang oder Ausgang oder innerhalb des Spaltes (16, 18) oder konzentrierte Drosseln (20) am Eingang und Ausgang oder am Eingang und innerhalb des Spaltes (16, 18) oder am Ausgang und innerhalb des Spaltes (16, 18) oder am Eingang und Ausgang und innerhalb des Spaltes (16, 18) umfasst, wobei die konzentrierte Drossel (20) als eine sich im Wesentlichen über den Querschnitt des Spaltes (16, 18) erstreckende, vom Gas durchströmbare Hülse und/oder ein sich über den Querschnitt des Spaltes (16, 18) erstreckender vom Gas durchströmbarer Stopfen ausgebildet ist und deren Drosselstrecke in ihrer Länge wesentlich kleiner als die Länge des Spaltes (16, 18) ist.

4. Vorrichtung nach Anspruch 3, **dadurch gekennzeichnet, dass** wenigstens ein Spalt (16, 18) zusätzlich eine gestreckte Drossel mit einer Drosselstrecke umfasst, deren Länge sich über die gesamte Länge oder wenigstens 20% der Länge des Spaltes (16, 18) erstreckt.

5. Vorrichtung nach Anspruch 4, **dadurch gekennzeichnet, dass** die gestreckte Drossel durch eine Profilierung der Oberfläche der zum Spalt weisenden Elektrode und/oder des Dielektrikums gebildet ist.

6. Vorrichtung nach Anspruch 3, **dadurch gekennzeichnet, dass** die als Hülse oder Stopfen ausgebildete Drossel (20) aus einem Vollmaterialkörper besteht und sich vollständig über den Querschnitt des Spaltes (16, 18) erstreckt und mit gasdurchlässigen Schlitzen oder Bohrungen versehen ist und/oder sich über einen Teilquerschnitt des Spaltes (16, 18) erstreckt.

7. Vorrichtung nach einem der Ansprüche 3 oder 6, **dadurch gekennzeichnet, dass** die konzentrierte Drossel (20) kreisringförmig gestaltet und in einem ersten und/oder zweiten Spalt (16, 18) angeordnet ist, wobei der erste Spalt (16) durch einen zwischen einer ersten Elektrode (10) und einem Dielektrikum (14) gebildeten zylindrischen Ringraum und der zweite Spalt (18) durch einen zwischen dem Dielektrikum (14) und einer zweiten Elektrode (12) umschlossenen zylindrischen Ringraum gebildet ist.

8. Vorrichtung nach einem der Ansprüche 3, 6 oder 7, **dadurch gekennzeichnet, dass** die Drossel (20) eine integrierte Hochspannungssicherung umfasst.

9. Vorrichtung nach einem der Ansprüche 3 oder 6 bis 8, **dadurch gekennzeichnet, dass** die Drossel (20) aus sauerstoff- und ozonbeständigem Material besteht.

10. Vorrichtung einem der Ansprüche 3 oder 6 bis 9, **dadurch gekennzeichnet, dass** die Drossel (20) und die erste und zweite Elektrode (10, 12) und das Dielektrikum (14) plattenförmig ausgebildet sind.

11. Vorrichtung nach einem der Ansprüche 3 bis 10, **dadurch gekennzeichnet, dass** die Verteilung des Gasvolumenstromes in den Spalten (16, 18) durch die Drossel (20) in einem Bereich von 20 bis 80 % einstellbar ist.

12. Vorrichtung nach einem der Ansprüche 3 bis 12, **dadurch gekennzeichnet, dass** durch individuelle Bemessung des Strömungswiderstandes der Drossel (20) Bauteiletoleranzen mit Einfluss auf die Ozongasausbeute in einer Serie der Vorrichtung kompensierbar sind.

## Claims

1. Method for producing ozone from oxygen-containing gases by a dark electric discharge in a setup with at least two gaps (16, 18) through which the gas flow and which are in each case formed between an electrode (10, 12) and a dielectric (14), which separates the gap (16, 18) from a further electrode (12, 10), **characterized in that** a distribution of the total gas volume flow between the gaps (16, 18) is controlled by a concentrated restriction of the gas volume flow of at least one gap (16, 18) at the inlet or outlet or within the gap (16, 18) or a subcombination at the inlet and outlet or at the inlet and within the gap (16, 18) or at the outlet and within the gap (16, 18) or at the inlet and outlet and within the gap (16, 18), the concentrated restriction being carried out by a restrictor (20), which is constructed as a sleeve through which the gas can flow and extending essentially over the cross-section of the gap (16, 18) and/or as a plug through which the gas can flow extending over the cross-section of the gap (16, 18) and whose restricting path length is significantly smaller than the length of the gap (16, 18).

2. Method according to claim 1, **characterized in that** a distribution of the total gas volume flow between the gaps (16, 18) is additionally controlled by an extended restriction of the gas volume flow at least within one gap (16, 18), the extended restriction being carried out by a restrictor, whereof the restricting path length extends over the entire length or at least 20% of the length of the gap (16, 18).

3. Apparatus for producing ozone from oxygen-containing gases by a dark electric discharge in a set with at least two gaps (16, 18) through which the gas flow and which are in each case formed between an electrode (10, 12) and a dielectric (14), which separates the gap (16, 18) from a further electrode (12, 10), **characterized in that** at least one gap (16, 18) comprises a concentrated restrictor (20) for restricting the gas volume flow at the inlet or outlet or within the gap (16, 18) or concentrated restrictors (20) at the inlet and outlet or at the inlet and within the gap (16, 18) or at the outlet and within the gap (16, 18) or at the inlet and outlet and within the gap (16, 18), the concentrated restrictor (20) being constructed as a sleeve through which the gas can flow and extending essentially over the cross-section of the gap (16, 18) and/or as a plug through which the gas can flow extending over the cross-section of the gap (16, 18) and whose restricting path length is significantly smaller than the length of the gap (16, 18).

4. Apparatus according to claim 3, **characterized in that** at least one gap (16, 18) additionally comprises an extended restrictor with a restricting path whose length extends over the entire length or at least 20% of the length of the gap (16, 18).

5. Apparatus according to claim 4, **characterized in that** the extended restrictor is formed by a profiling of the surface of the dielectric and/or the electrode directed towards the gap.

6. Apparatus according to claim 3, **characterized in that** the restrictor (20) constructed as a sleeve or plug comprises a solid material body and extends completely over the cross-section of the gap (16, 18) and is provided with gas-permeable slots or bores and/or extends over a partial cross-section of the gap (16, 18).

7. Apparatus according to one of the claims 3 or 6, **characterized in that** the concentrated restrictor (20) is circular and is placed in a first and/or second gap (16 18), the first gap (16) being formed by a cylindrical annulus between a first electrode (10) and a dielectric (14) and the second gap (18) is formed by a cylindrical annulus between the dielectric (14) and a second electrode (12).

8. Apparatus according to one of the claims 3, 6 or 7, **characterized in that** the restrictor (20) comprises an integrated high voltage fuse.

9. Apparatus according to one of the claims 3 or 6 to 8, **characterized in that** the restrictor (20) is made from oxygen-resistant and ozone-resistant material.

10. Apparatus according to one of the claims 3 or 6 to 9, **characterized in that** the restrictor (20) and the first and second electrodes (10, 12) and dielectric (14) have a plate-like construction.

11. Apparatus according to one of the claims 3 to 10, **characterized in that** the gas volume flow distribution in the gaps (16, 18) can be adjustable in a range 20 to 80% by the restrictor (20).

12. Apparatus according to one of the claims 3 to 12, **characterized in that** by individual dimensioning of the flow resistance of the restrictor (20) it is possible to compensate component tolerances influencing the ozone gas output in one apparatus series.

## Revendications

1. Procédé de production d'ozone à partir de gaz oxygéné par décharge électrique silencieuse au sein d'une disposition comportant au moins deux fentes (16, 18) traversées par le gaz, qui sont formées respectivement entre une électrode (10/12) et un diélectrique (14) séparant la fente respective (16, 18) d'une autre électrode (12, 10), **caractérisé en ce qu'**une répartition du débit volumétrique total du gaz entre les fentes (16, 18) est commandée au moyen d'une restriction concentrée du débit volumétrique du gaz d'au moins une fente (16, 18) à l'entrée ou à la sortie ou à l'intérieur de la fente (16, 18) ou d'une sous-combinaison à l'entrée et à la sortie ou à l'entrée et à l'intérieur de la fente (16, 18) ou à la sortie et à l'intérieur de la fente (16, 18) ou à l'entrée et à la sortie et à l'intérieur de la fente (16, 18), la restriction concentrée ayant lieu au moyen d'un restricteur (20) qui est conçu en forme de douille s'étendant essentiellement sur la section transversale de la fente (16, 18) et pouvant être traversé par le gaz et/ou en forme de bouchon s'étendant essentiellement sur la section transversale de la fente (16, 18) et pouvant être traversé par le gaz et dont la longueur du chemin de restriction est nettement inférieure à la longueur de la fente (16, 18).

2. Procédé selon la revendication 1, **caractérisé en ce que** la répartition du débit volumétrique total du gaz entre les fentes (16, 18) est commandée en plus par une restriction étirée du débit volumétrique du gaz au moins à l'intérieur d'une fente (16, 18), la restriction étirée étant réalisée par un restricteur, dont la longueur du chemin de restriction s'étend sur toute la longueur ou au moins sur 20% de la longueur de la fente (16, 18).

3. Dispositif de production d'ozone à partir de gaz oxygéné par décharge électrique silencieuse au sein d'une disposition comportant au moins deux fentes (16, 18) traversées par le gaz, qui sont formées respectivement entre une électrode (10, 12) et un diélectrique (14) séparant la fente respective (16, 18) d'une autre électrode (12, 10), **caractérisé en ce qu'**au moins une fente (16, 18) comprend un restricteur concentré (20) pour restreindre le débit volumétrique du gaz à l'entrée ou à la sortie ou à l'intérieur de la fente (16, 18) ou des restricteurs concentrés (20) à l'entrée et à la sortie ou à l'entrée et à l'intérieur de la fente (16, 18) ou à l'entrée et à la sortie et à l'intérieur de la fente (16, 18), le restricteur concentré (20) étant conçu en forme de douille s'étendant essentiellement sur la section transversale de la fente (16, 18) et pouvant être traversé par le gaz et/ou en forme de bouchon s'étendant sur la section transversale de la fente (16/18) et pouvant être traversé par le gaz et dont la longueur du chemin de restriction est nettement inférieure à la longueur de la fente (16, 18).

4. Dispositif selon la revendication 3, **caractérisé en ce qu'**au moins une fente (16, 18) comprend en plus un restricteur étiré avec un chemin de restriction dont la longueur s'étend sur toute la longueur ou sur 20% au moins de la longueur de la fente (16, 18).

5. Dispositif selon la revendication 4, **caractérisé en ce que** le restricteur étiré est formé par un profilage de la surface de l'électrode et/ou du diélectrique dirigé vers la fente.

6. Dispositif selon la revendication 3, **caractérisé en ce que** le restricteur (20) conçu comme douille ou bouchon est un corps de matière pleine qui s'étend intégralement sur la section transversale de la fente (16, 18) et qui est pourvu de fentes ou de perçages laissant passer le gaz et/ou qui s'étend sur une partie de la section transversale de la fente (16, 18).

7. Dispositif selon l'une des revendications 3 ou 6, **caractérisé en ce que** le restricteur cencentré (20) est conçu en forme circulaire et qu'il est disposé dans une première et/ou une seconde fente (16, 18), la première fente (16) étant formée par un espace annulaire cylindrique créé entre une première électrode (10) et un diélectrique (14) et la seconde fente (18) étant créée par un espace annulaire cylindrique enfermé entre le diélectrique (14) et une seconde électrode (12).

8. Dispositif selon l'une des revendications 3, 6 ou 7, **caractérisé en ce que** le restricteur (20) comprend un coupe-circuit à haute tension intégré.

9. Dispositif selon l'une des revendications 3 ou 6 à 8, **caractérisé en ce que** le restricteur (20) est en une matière résistante à l'oxygène et à l'ozone.

10. Dispositif selon l'une des revendications 3 ou 6 à 9, **caractérisé en ce que** le restricteur (20) et la première et la seconde électrode (10, 12) et le diélectrique (14) sont conçus en forme de plaque.

11. Dispositif selon l'une des revendications 3 à 10, **caractérisé en ce que** la répartition du débit volumétrique du gaz dans les fentes (16, 18) est réglable au moyen du restricteur (20) dans une plage entre 20 et 80%.

12. Dispositif selon l'une des revendications 3 à 12, **caractérisé en ce que** des tolérances des composants ayant une influence sur le gain d'ozone peuvent être compensées au niveau d'une série de fabrication du dispositif grâce au dimensionnement individuel de la résistance à l'écoulement.
